# FASCICULE DE BREVET EUROPEEN

(11) **EP 3 888 000 B1**
(45) Date de publication et mention de la délivrance du brevet: **27.08.2025**
(21) Numéro de dépôt: 19805311.8
(22) Date de dépôt: 21.11.2019
(51) Int. Cl.: G06V 40/16, G06V 40/40

(54) **DISPOSITIF ET PROCEDE D'AUTHENTIFICATION D'UN INDIVIDU**
VORRICHTUNG UND VERFAHREN ZUR AUTHENTIFIZIERUNG EINES INDIVIDUUMS
DEVICE AND METHOD FOR INDIVIDUAL AUTHENTICATION

(30) Priorité: 28.11.2018 FR 1871991
(43) Date de publication de la demande: 06.10.2021
(73) Titulaire: IN-IDT, 75116 Paris (FR)
(72) Inventeur: CREMER, Sandra, 92130 ISSY LES MOULINEAUX (FR); LAMBLIN, Thibaut, 75016 PARIS (FR)
(74) Mandataire: Brun, Philippe Alexandre Georges
(86) Numéro de dépôt international: PCT/EP2019/082027
(87) Numéro de publication internationale: WO 2020/109122

(56) Documents cités:
- US-B1- 9 251 427
- RAJEEV RANJAN ET AL: "A Fast and Accurate System for Face Detection, Identification, and Verification", ARXIV.ORG, CORNELL UNIVERSITY LIBRARY, 201 OLIN LIBRARY CORNELL UNIVERSITY ITHACA, NY 14853, 20 September 2018 (2018-09-20), XP081193481
- HOSSAIN MD ASGAR ET AL: "A real-time face to camera distance measurement algorithm using object classification", 2015 INTERNATIONAL CONFERENCE ON COMPUTER AND INFORMATION ENGINEERING (ICCIE), IEEE, 26 November 2015 (2015-11-26), pages 107 - 110, XP032858257, ISBN: 978-1-4673-8342-4, [retrieved on 20160203], DOI: 10.1109/CCIE.2015.7399293

## Description

L'invention concerne un dispositif et un procédé permettant de détecter des tentatives d'usurpation d'identité fondées notamment sur la présentation de visages créés ou reproduits sur une surface. Elle permet notamment d'authentifier un individu par reconnaissance faciale.

Elle s'applique, de manière générale, pour la reconnaissance des personnes basée sur une ou plusieurs caractéristiques biométriques, par exemple la peau, l'iris, les caractéristiques du visage. Elle permet de détecter une éventuelle usurpation d'identité fondée sur la présentation d'un artefact total ou partiel d'un visage.

De nombreuses techniques pour détecter des tentatives d'usurpation d'identité sont décrites dans l'art antérieur. Un des problèmes posés est de détecter des tentatives d'usurpation d'identité fondées sur la présentation de visages créés ou reproduits sur une surface, par exemple des photographies sur un support papier de toute taille, des photographies sur un écran de type tablette ou téléphone, des flux d'images vidéo sur un écran de type tablette ou téléphone.

De nombreuses solutions existent dans l'art antérieur pour détecter de faux visages. Elles sont regroupées en différentes catégories.

Certaines solutions sont basées sur la détection de mouvements dans le visage considéré.

Par exemple, dans le brevet US9665784, le regard de l'individu est guidé et contrôlé grâce à un écran, puis on vérifie que ce regard suit bien une cible qui se déplace sur un écran.

Dans la demande de brevet US2018046850, on vérifie que le visage est bien en mouvement dans le flux vidéo et on s'assure, par un calcul de score, que ce visage est identique au visage présent dans la trame du flux vidéo.

Une autre solution est basée sur le suivi d'un point caractéristique du visage dans une séquence vidéo ou encore par la détection du clignement des yeux, ou encore par la reconnaissance du battement de cœur au niveau des yeux.

Une autre approche repose sur l'analyse du visage dans l'espace.

La demande de brevet US2018046871 analyse le visage dans deux plans distincts et calcule un score de similarité pour les analyses entre ces deux plans.

La solution de la demande de brevet US2017345146 utilise un matériel permettant d'obtenir une carte de profondeur et une image RGB du visage. Elle cherche à détecter un visage dans chacune de ces images, puis elle vérifie que les positions relatives ainsi obtenues sont cohérentes et correspondent à un même visage. Elle sélectionne ensuite une zone d'intérêt dans chaque image et applique à chacune de ces zones, une technique de classification permettant de discriminer les vrais visages des faux visages.

La solution décrite dans le brevet US9898674, détecte des couples de points caractéristiques qui se trouvent dans des plans différents et vérifie que la forme 3D est conforme à un visage vivant.

Une autre approche est basée sur les méthodes d'apprentissages, de type Deep Learning, mettant en œuvre une classification neuronale de type CNN (Convolutional Neural Network) qui prend en entrée un flux vidéo du visage, sur une classification SVM (support Vector Machine), ou une classification à partir d'une séquence vidéo comportant des mouvements spécifiques du visage.

D'autres solutions sont basées sur l'analyse des reflets sur le visage, par exemple en éclairant le visage avec une ou plusieurs sources de lumières structurées ou non, et en analysant le reflet qui en résulte.

Une autre approche consiste à faire une analyse du fond. Par exemple, on détoure le visage dans la séquence vidéo et on vérifie que le fond est conforme au fond attendu, par comparaison avec une vidéo de la scène mémorisée sans visage.

Une autre solution repose sur la reconnaissance d'iris.

Le brevet US8364971 décrit une solution qui détecte les iris dans l'image d'un visage, puis effectue une reconnaissance d'iris pour s'assurer qu'il s'agit à la fois d'un individu et à la fois d'un visage vivant.

Le brevet US 9521427 divulgue un procédé et un système qui permet de vérifier si l'image acquise par une caméra provient d'un visage vivant ou d'un visage imprimé.

L'objet de l'invention vise un procédé et un système pour effectuer une reconnaissance faciale tout en détectant les tentatives d'usurpation d'identité fondées sur la représentation de visages créés ou reproduits, qui consiste notamment à coupler les informations issues d'une caméra acquérant des images dans le domaine visible avec celles d'une caméra configurée pour obtenir une carte de profondeur de la scène.

Cette nouvelle approche permet notamment d'améliorer les performances dans le taux de détection des tentatives d'usurpation, de fausses alarmes, de temps de traitement des solutions décrites dans l'art antérieur.

L'invention concerne un procédé d'authentification d'un individu par reconnaissance faciale comprenant l'acquisition d'images dans le visible d'au moins un individu à identifier et simultanément d'au moins une carte de profondeur tel que défini par la revendication 1.

Après la reconnaissance du visage dans l'image :
- on définit une première forme géométrique liée au visage,
- on définit une frontière entre une zone du visage détouré et le fond de carte,
- lorsque la valeur de l'écart entre la profondeur moyenne de la zone du visage et la profondeur moyenne de la zone du fond vérifie une valeur seuil donnée, on détecte un ou plusieurs points caractéristiques du visage et on projette le ou lesdits points caractéristiques dans la carte de profondeur acquise au même instant que l'image contenant le visage,
- on vérifie la taille du visage en utilisant la distance entre des points caractéristiques choisis,
- si la taille du visage correspond à une taille de visage vivant, on contrôle les caractéristiques de profondeur de la zone du visage détouré, et
- on identifie un individu si les caractéristiques de profondeur de la zone du visage détouré conduisent à un visage vivant ou on émet un signal de tentative d'usurpation d'identité.

Selon une variante de réalisation, on vérifie la taille d'un visage en utilisant la distance inter-yeux.

La sélection du visage est effectuée en exécutant, par exemple, les étapes suivantes :
- détecter la position d'un organe ou d'une partie du visage dans l'image considérée et déduire une distance d'un individu par rapport à un dispositif d'acquisition des images,
- mesurer la qualité de l'image contenant le visage et la comparer à une valeur seuil afin de déterminer si le visage correspond à un visage vivant,
- lorsque la qualité de l'image est insuffisante, émettre un signal d'alarme.

On peut détecter la position des yeux dans l'image contenant le visage et déterminer la distance entre l'individu à identifier et le dispositif d'acquisition d'images en utilisant la distance inter-yeux exprimée en pixels.

Pour la mesure de qualité d'une image on utilise, par exemple, une valeur d'angle entre l'axe des yeux du visage contenu dans l'image et un axe horizontal.

Pour la reconnaissance du visage on compare, par exemple, le visage de l'image acquise à une image stockée dans une base de données ou on compare le visage contenu dans l'image à un visage contenu dans une image acquise en temps réel.

On acquiert les images de l'individu à identifier dans le visible au moyen d'une caméra travaillant dans le visible RGB (Red, Green, Blue) et la carte de profondeur en utilisant une caméra « Time Of Flight » ou TOF.

Selon une variante, on acquiert les images d'un individu à identifier dans le visible au moyen d'une première caméra RGB et la carte de profondeur en utilisant une deuxième caméra RGB, les deux caméras étant positionnées l'une par rapport à l'autre pour obtenir un effet stéréoscopique.

L'invention concerne aussi un dispositif d'authentification d'un individu comprenant en combinaison au moins les éléments suivants :
- un dispositif d'acquisition d'une image d'un individu dans le domaine du visible,
- un dispositif configuré pour déterminer une carte de profondeur,
- un processeur adapté à exécuter les étapes du procédé selon l'invention.

Le dispositif d'acquisition dans le visible est, par exemple, une caméra RGB et le dispositif d'acquisition de la carte de profondeur est une caméra TOF.

Le dispositif d'acquisition dans le visible peut être une première caméra RGB et le dispositif d'acquisition de la carte de profondeur une deuxième caméra RGB, les deux caméras étant positionnées l'une par rapport à l'autre pour obtenir un effet stéréoscopique.

Les dessins annexés illustrent l'invention :
[Fig.1] représente une installation d'un système de détection d'usurpation selon l'invention pour identifier une personne,
[Fig.2] représente un exemple de système de détection d'usurpation d'identité selon l'invention,
[Fig.3] représente un organigramme détaillant les étapes mises en œuvre par le procédé selon l'invention, et
[Fig.4] illustre une zone de fond autour d'un visage détouré.

Le procédé et le système de détection d'usurpation d'identité ont notamment pour fonction d'acquérir un visage et de le comparer à un visage de référence tout en s'assurant que le visage acquis est un visage vivant. Plus particulièrement, l'objectif technique du procédé est de vérifier qu'il ne s'agit pas :
- d'une photo de visage imprimée sur un support papier de toute taille,
- d'une photo de visage imprimée sur un T-shirt,
- d'une photo de visage affichée sur un écran de type tablette ou téléphone,
- d'un flux d'images vidéo de visage affiché sur un écran de type tablette ou téléphone,
- d'une photo de visage imprimée sur un masque papier courbé, ou encore de tout objet ou support.

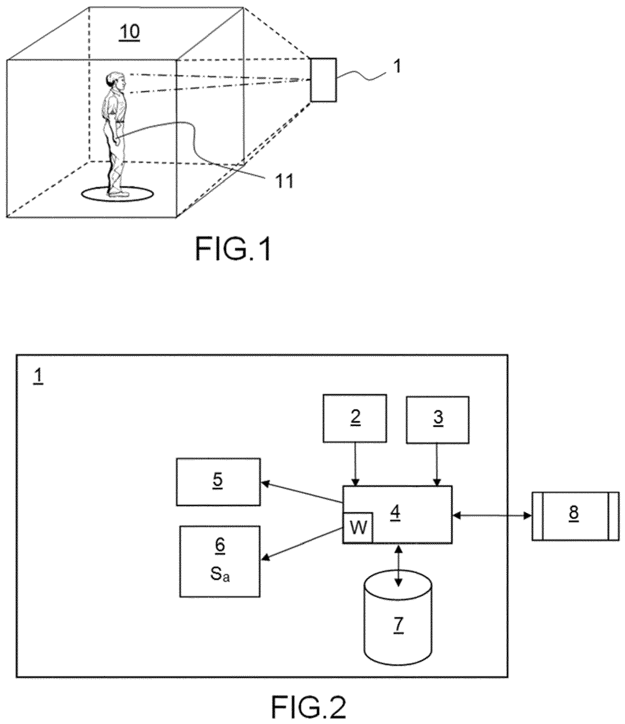

Les figures 1 et 2 illustrent un exemple de système 1 selon l'invention pour l'identification d'un individu qui se trouve dans une zone de contrôle donnée. Le système comprend par exemple au moins les éléments matériels suivants :
- Une caméra RGB 2 capturant des images dans le domaine visible,
- Une caméra de type « Time Of Flight » (TOF) 3 permettant d'obtenir une carte de profondeur de la scène.

Les positions relatives des deux caméras RGB et TOF l'une par rapport à l'autre doivent être fixes. Les deux caméras doivent être, de préférence, les plus proches possibles. Elles peuvent être positionnées sur un même axe support vertical et l'une au-dessus de l'autre. Ceci est important pour l'étape de projection d'une image dans la carte de profondeur qui sera décrite ci-après.

Ces deux caméras sont reliées à un dispositif de traitement des images capturées, par exemple, un ou plusieurs processeurs 4 configurés pour exécuter les étapes du procédé selon l'invention. Un écran 5 peut être relié aux processeurs 4 mis en parallèle pour afficher le résultat obtenu à l'issue des étapes du procédé selon l'invention. L'ensemble des processeurs peut aussi être relié à un dispositif 6 configuré pour générer un signal d'alerte Sa en cas de tentative de fraude, i.e., d'usurpation d'identité.

Le logiciel de traitement des données selon l'invention est implanté sur le ou les processeurs fonctionnant en parallèle. Le logiciel comprend différents modules correspondant aux étapes décrites ci-après, ainsi qu'un module de gestion ou « workflow » W qui pilote la chaîne globale d'acquisition et de traitement des données, ainsi que la génération de signaux d'alertes.

Le système comprend aussi une base de mémoire, par exemple une mémoire 7 stockant des visages de référence qui seront utilisés pour l'étape de comparaison avec les images capturées. Le système peut aussi comprendre un dispositif de lecture 8 du titre d'identité. Ceci permet de disposer d'une image en temps réel qui sera utilisée pour l'étape d'identification du détenteur du titre.

Le système d'acquisition et de traitement des données est disposé dans une zone 10 ou « volume de capture », qui peut être un SAS de contrôle. L'individu 11 ou personne à identifier entre dans cette zone de contrôle pour être identifié.

Selon une variante de réalisation, le volume de capture pourrait être une pièce dans laquelle se trouve plusieurs individus, le système cherchant à identifier un ou plusieurs de ces individus.

Le ou les processeurs sont configurés pour exécuter les étapes du procédé selon l'invention. Chaque processeur comporte par exemple plusieurs modules de traitement des données et des informations qui vont être détaillés ci-après.

Selon une variante de réalisation, la caméra de type TOF peut être remplacée par une deuxième caméra RGB qui travaille dans le domaine du visible pour capturer des images. Dans ce cas, les deux caméras RGB sont positionnées l'une par rapport à l'autre de façon à obtenir un phénomène stéréo, selon des principes connus de l'homme du métier, et ainsi une carte de profondeur de la scène. Par exemple, les deux caméras sont positionnées sur un même axe horizontal à 10cm l'une de l'autre, avec un croisement des axes optiques de ces deux caméras.

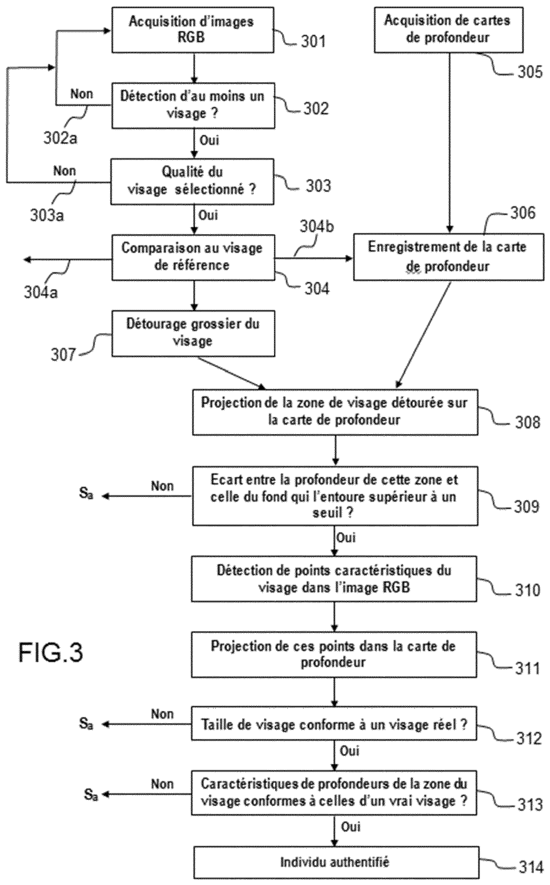

La figure 3 est un synoptique du séquencement des étapes mises en œuvre par le procédé selon l'invention et exécutées par les modules de l'algorithme implémenté dans le ou les processeurs. Lors d'une première étape, les caméras vont acquérir des images d'un visage et de cartes de profondeur.

### Etape d'acquisition d'images RGB et de cartes de profondeur - 301

Une caméra RGB est utilisée pour capturer en continu des images li d'une scène (présence d'un individu 11 ou d'un individu dans la zone de contrôle) comprise dans le champ de vision de la caméra RGB,
En parallèle, une caméra « Time of Flight » est utilisée pour capturer en continu la carte de profondeur CP de la scène, selon un principe connu de l'homme du métier.

Lors d'une deuxième étape, le procédé va chercher à détecter un visage.

### Détection du visage - 302

Le flux d'images RGB, FI_{RGB}, capturé par la caméra RGB est traité en parallèle sur l'ensemble des processeurs pour maximiser la vitesse de traitement des données. Un algorithme de détection et de localisation basé, par exemple, sur les cascades de Haar est appliqué à chaque image capturée I_{RGB} de façon à détecter et localiser le ou les visages 10_{RGB} qui pourraient se trouver dans une même image I_{RGB}. Lors de l'étape suivante, le procédé va sélectionner une image contenant un visage et contrôler sa qualité. Lorsqu'aucun visage n'est détecté, 302a, le procédé retourne à l'étape d'acquisition des images et de la profondeur de carte.

### Sélection du visage à traiter et contrôle de qualité de l'image - 303

Un algorithme du même type basé sur des cascades de Haar est également utilisé pour détecter la position P(12) des yeux 12 dans l'image considéré. On peut donc en déduire la distance inter-yeux dₚ(12) en pixels, ainsi que la distance d_{RGB}(12) approximative à laquelle se situe l'individu par rapport à la caméra RGB.

Si l'individu 11 ne se trouve pas dans le volume de capture du dispositif (20-100cm, par exemple) alors le visage n'est pas pris en compte et le procédé continue à acquérir des images, 303a.

Si plusieurs visages sont détectés dans une même image et localisés à l'intérieur du volume de capture du dispositif, alors c'est le visage qui se trouve le plus proche de la caméra (celui pour lequel la distance inter-yeux en pixels dₚ(12) est la plus grande, par exemple) qui est retenu pour la suite des traitements. Cette image est mémorisée en temps réel.

Des mesures de la qualité de l'image acquise sont effectuées sur le visage retenu et comparées à des seuils afin de vérifier que la qualité de l'image contenant le visage est suffisante pour effectuer un contrôle de reconnaissance faciale. Ces mesures peuvent évaluer la pose du visage par rapport à la caméra, l'éclairage etc. Si la qualité de l'image contenant le visage est insuffisante, alors aucun autre traitement ne sera effectué sur cette image. Lorsque le procédé dispose d'une image de qualité suffisante, il procédera à la reconnaissance faciale.

Les critères de qualité et les niveaux de seuil de rejet utilisés dépendent notamment de l'algorithme de reconnaissance faciale utilisé. Par exemple, une mesure peut être le degré d'inclinaison du visage, i.e., l'angle entre l'axe des yeux et un axe horizontal. Si cet angle est supérieur à 45°, alors l'image sera rejetée, par exemple.

Dans le cas où l'image retenue n'a pas la qualité suffisante pour continuer les étapes, l'image est rejetée et le procédé va continuer à scanner (acquérir des images) jusqu'à trouver une image contenant un visage et ayant la qualité requise pour les traitements.

Le procédé peut aussi considérer une autre image associée à un autre visage pour des applications cherchant à identifier un visage dans une foule, dans une zone donnée.

### Reconnaissance faciale - 304

Les étapes d'acquisition d'images RGB et de détection et de contrôle de visage se poursuivent en continu (traitement du flux d'images en continu).

On applique à chaque image de qualité suffisante et contenant un visage, un algorithme de reconnaissance faciale connu de l'homme du métier qui va comparer l'image acquise à une image de référence I_{ref}. L'image de référence I_{ref} contient un visage qui correspond à l'identité de l'individu en train d'être contrôlé. Cette image de référence peut provenir d'un titre d'identité, tel qu'un passeport biométrique lu en temps réel lors du contrôle ou encore d'une image qui a été stockée préalablement dans une base de données biométriques, l'association se faisant par le croisement avec d'autres informations d'identité contenues dans le titre.

A l'issue de cette étape de reconnaissance faciale, soit le visage n'est pas reconnu 304a et le procédé émet un signal d'alerte Sₐ constatant a priori une tentative d'usurpation, soit le visage a été reconnu et le procédé va chercher à vérifier que le visage reconnu est bien un visage vivant en exécutant les étapes décrites ci-après. Pour cela, le procédé va prendre en compte la carte de profondeur, 304b.

### Enregistrement de la carte de profondeur - 305 - 306

L'acquisition de la carte de profondeur est exécutée en continu, simultanément à l'acquisition des images pour un visage. Chaque carte de profondeur est stockée en mémoire pour un instant donné t et correspond à une image acquise pour un visage. Lorsqu'une image RGB est rejetée alors la carte de profondeur est supprimée de la mémoire. Dans le cas contraire, pour une image de qualité suffisante contenant un visage reconnu lors de l'étape de reconnaissance faciale, alors la carte de profondeur associée est enregistrée pour la suite des traitements. Lors de l'étape suivante, le procédé va effectuer un détourage du visage et projeter le résultat dans la carte de profondeur acquise simultanément.

Une image contenant un visage peut être rejetée pour différentes raisons. Par exemple, elle ne contient aucune image de qualité suffisante pour la reconnaissance faciale. L'image peut aussi être rejetée car le visage détecté et le visage de référence sont différents.

### Détourage grossier du visage et projection dans la carte de profondeur - module de détourage grossier - 307 - 308

Si l'image du visage acquise avec la caméra RGB est bien reconnue par rapport au visage de référence, alors un détourage grossier du visage est appliqué sur l'image RGB acquise. Ce détourage utilise le résultat de la détection de visage. Il permet de localiser le visage dans l'image en définissant la frontière entre la zone du visage et le fond.

La détection de visage localise le visage dans l'image RGB. A partir de là et en utilisation des critères géométriques liés au visage, il est possible de définir une forme géométrique (un rectangle, par exemple) qui se rapproche le mieux de la frontière entre le visage et le fond. Cette frontière L va ensuite être projetée dans la carte de profondeur acquise en même temps que l'image RGB contenant le visage qui a été reconnu. Cette opération nécessite un positionnement fixe des caméras RGB et TOF l'une par rapport à l'autre, ainsi qu'une étape préliminaire de calibration du système réalisé selon des principes connus de l'homme du métier. Les tests suivants vont conduire au final à valider si le visage retenu est un visage réel, i.e., valider la reconnaissance faciale.

### Test 1 - Ecart entre la profondeur de la zone du visage et celle du fond - 309

Une fois la zone du visage isolée par rapport au fond dans la carte de profondeur, on peut estimer une profondeur moyenne P_{moy} de la zone du visage, c'est-à-dire la distance d_{RGB}(10) du visage 10 par rapport à la caméra RGB. Pour calculer cette valeur, on élimine les valeurs de profondeur aberrantes de la zone du visage en utilisant un algorithme de traitement connu de l'homme du métier.

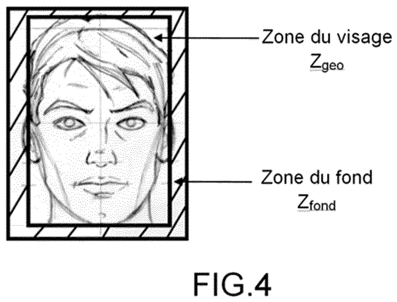

Ensuite, on considère une zone du fond Z_{fond} entourant le visage détouré, la largeur de cette zone étant petite comme il est illustré à la figure 4, et on calcule la profondeur moyenne P_{moy}(Z_{fond}) du fond dans cette zone selon un principe connu de l'homme du métier. La définition de cette zone de fond en fonction de la zone de visage a été optimisée par une étape d'apprentissage de façon à maximiser l'écart entre la profondeur du visage et du fond pour des vrais visages et à minimiser ce même écart pour de faux visages à l'exception des masques courbés.

Par exemple, si la zone du fond est caractérisée par une forme géométrique paramétrique, des expériences préalables ont été réalisées au cours desquelles différentes valeurs pour les paramètres définissant cette zone ont été testées. Pour chaque test, on calcule l'écart entre la profondeur moyenne du visage P(Z_{geo}) et la profondeur moyenne du fond P(Z_{fond}). Au final, on retient les paramètres qui maximisent cet écart.

Ainsi, si l'écart entre la profondeur de la zone du visage et de la zone du fond est inférieur à une valeur seuil [seuil1], le test n°1 échoue et le processus reprend à zéro, i.e., acquisition des images dans le domaine visible et du fond de carte.

L'écart Δ(P(Z_{fond}), P(Z_{geo})) entre la profondeur moyenne du fond et la profondeur moyenne de la zone entourant le visage détouré est, par exemple, le premier critère qui permettra de décider s'il faut lever une alerte ou non. Plus cet écart sera faible, plus la probabilité que le visage analysé est une reproduction de visage (visage non vivant, impression sur un support) est grande. On fixe donc une valeur seuil (seuil1) pour cet écart en-dessous duquel on considère qu'il y a une tentative de fraude. Cette valeur de seuil prend notamment en compte un compromis entre un taux de fausse alarme et un taux de fausse acceptation. On teste différentes valeurs de seuils possibles et on retient celles qui permettent d'obtenir un taux de fausse alarme proche d'une valeur cible prédéfinie. L'étape suivante va consister à détecter des points caractéristiques dans l'image acquise dans le visible.

### Détection de points caractéristiques dans l'image RGB - 310

Si le premier test est réussi, alors on reprend l'image RGB qui a été reconnue par le module afin d'y détecter au moins deux points caractéristiques associés à un paramètre biométrique de l'individu, par exemple, au niveau du visage, comme le nez ou la bouche, les yeux ayant déjà été détectés à l'étape 203 de sélection du visage à traiter et du contrôle de qualité. Ces détections se font grâce à des techniques connues de l'état de l'art, comme des cascades de Haar ou d'autres techniques d'apprentissage. Des points caractéristiques du visage ayant été détectés, l'étape suivante consiste à projeter ces points caractéristiques dans la carte de profondeur.

### Projection des points caractéristiques dans la carte de profondeur - 311

De façon similaire à l'étape de projection des visages, les points caractéristiques détectés sont projetés dans l'image RGB dans la carte de profondeur grâce à une étape de calibration effectuée au préalable sur le système. Les points caractéristiques projetés vont permettre de vérifier par exemple la taille du visage.

### Test 2 - Vérification de la taille du visage - 312

Pour des visages réels d'adultes, la distance entre certains points du visage est relativement constante d'une personne à une autre. Par exemple, la distance inter-pupilles vaut environ 7 cm. Ainsi, pour une distance fixée entre l'individu et la caméra on peut connaitre la distance inter-yeux en pixels à partir des caractéristiques de la caméra et de sa position dans l'espace.
Par conséquent, afin de vérifier que la taille du visage acquis est bien celle d'un visage réel on procède, par exemple, de la façon suivante :
On mesure dans l'image RGB la distance en pixels dₚ entre différents points caractéristiques du visage, par exemple entre les yeux,
A partir de la projection de ces points dans la carte de profondeur, on en déduit à quelle distance se trouvait le individu de la caméra d_{cam}, à l'instant t d'acquisition de l'image de son visage par la caméra RGB,
On calcule la distance inter-yeux théorique pour cette valeur de d_{cam} connaissant les caractéristiques optiques du système d'acquisition selon des calculs connus de l'homme du métier,
On vérifie que l'écart entre les valeurs théoriques et réelles de dₚ est bien inférieur à un seuil. Si ce n'est pas le cas, une alerte de fraude est levée. Dans le cas contraire, on va contrôler les caractéristiques de profondeur de la zone du visage.
Les fraudes détectées par ce test correspondent à des tentatives de fraude pour lesquelles la reproduction du visage n'est pas de la même taille que le visage réel

### Test 3 - Contrôle des caractéristiques de profondeur de la zone du visage - 313

Si le deuxième test est réussi, alors on passe au dernier test. Ce test considère plusieurs points caractéristiques du visage dans la carte de profondeur et analyse leurs profondeurs relatives. Par exemple, on peut calculer l'écart de profondeur entre les yeux et le nez et vérifier que cet écart est bien conforme à un visage réel. Si ce troisième test échoue, alors il va y avoir émission d'un signal d'alerte. Au contraire, si ce dernier test réussi, alors le procédé considère que la reconnaissance faciale est valide et que le visage reconnu est un visage vivant et non une reproduction. L'authentification de l'individu est validée, 314.

Le procédé et le système de détection selon l'invention permettent notamment d'atteindre les performances suivantes :
- Un taux de détection des tentatives d'usurpation supérieur à 90%,
- Un taux de fausses alarmes inférieur à 5%,
- Un temps de traitement global comparable à celui d'une chaîne de reconnaissance faciale sans détection d'usurpation d'identité. En effet, l'ensemble des briques liées à la détection d'usurpation d'identité ont un temps de traitement inférieur à 500 ms, alors que la chaîne de reconnaissance faciale dure plusieurs secondes.

Par rapport aux solutions connues de l'art antérieur, le procédé selon l'invention présente les avantages suivants :
- il ne nécessite aucun mouvement particulier de l'individu à authentifier,
- il ne nécessite pas d'extraire des descripteurs complexes ou de faire un apprentissage sur des types d'usurpation d'identité précis, et s'applique donc facilement à différents types d'usurpation,
- il fonctionne quel que soit le matériau sur lequel est reproduit le visage. Il fonctionne également si de vrais yeux apparaissent dans la reproduction de l'image (masque papier avec des trous au niveau des yeux),
- il est robuste aux conditions d'éclairage ou de luminosité de l'environnement, et
- ne nécessite pas de localisation, d'encodage ou de reconnaissance d'iris.

## Revendications

1. Procédé d'authentification d'un individu comprenant l'acquisition d'images dans le visible d'au moins un individu à identifier et simultanément d'au moins une carte de profondeur de la scène comportant les étapes suivantes :
- disposer d'une image de qualité donnée contenant au moins un visage reconnu par rapport à des données identitaires et définir une zone géométrique autour dudit visage dans l'image acquise dans le domaine visible et projeter la zone géométrique dans une carte de profondeur acquise au même instant t, (308),
- déterminer une valeur d'écart Δ( P(Z_{fond}), P(Z_{geo})) entre la profondeur moyenne de la zone Z_{geo} du visage détouré et la profondeur moyenne d'une zone de fond Z_{fond} de la carte de profondeur, et comparer cette valeur d'écart à une valeur seuil (seuil1),
- si cette valeur de seuil n'est pas respectée, émettre un signal d'alerte, sinon,
- détecter dans l'image au moins deux points caractéristiques associés à un paramètre biométrique de l'individu, (310), et projeter lesdits points caractéristiques détectés dans la carte de profondeur, (311),
- vérifier que la taille du visage correspond à une taille d'un individu vivant, (312),
- vérifier les profondeurs relatives des points caractéristiques dans la carte de profondeur, (313), et confirmer que le visage est vivant afin d'identifier définitivement l'individu ou émettre un signal de tentative de fraude.

2. Procédé selon la revendication 1 **caractérisé en ce que** après la reconnaissance du visage dans l'image :
- on définit une première forme géométrique liée au visage,
- on définit une frontière entre une zone du visage détouré et le fond de carte,
- lorsque la valeur de l'écart entre la profondeur de la zone du visage et la zone du fond vérifie une valeur seuil donnée, on détecte un ou plusieurs points caractéristiques du visage et on projette le ou lesdits points caractéristiques dans la carte de profondeur acquise au même instant que l'image contenant le visage,
- on vérifie la taille du visage en utilisant la distance entre des points caractéristiques choisis,
- si la taille du visage correspond à une taille de visage vivant, on contrôle les caractéristiques de profondeur de la zone du visage détouré, et
- on identifie un individu si les caractéristiques de profondeur de la zone du visage détouré conduisent à un visage vivant ou on émet un signal de tentative d'usurpation d'identité.

3. Procédé selon la revendication 2 **caractérisé en ce qu'**on vérifie la taille d'un visage en utilisant la distance inter-yeux.

4. Procédé selon l'une des revendications 1 à 3 **caractérisé en ce que** le visage est sélectionné en exécutant les étapes suivantes :
- détecter la position d'un organe ou d'une partie du visage dans l'image considérée et déduire une distance d'un individu par rapport à un dispositif d'acquisition des images,
- mesurer la qualité de l'image contenant le visage et la comparer à une valeur seuil afin de déterminer si le visage correspond à un visage vivant,
- lorsque la qualité de l'image est insuffisante, émettre un signal d'alarme.

5. Procédé selon la revendication 4 **caractérisé en ce que** l'on détecte la position des yeux dans l'image contenant le visage et on détermine la distance entre l'individu à identifier et le dispositif d'acquisition d'images en utilisant la distance inter-yeux exprimée en pixels.

6. Procédé selon l'une des revendications 4 ou 5 **caractérisé en ce que** la mesure de qualité d'une image utilise une valeur d'angle entre l'axe des yeux du visage contenu dans l'image et un axe horizontal.

7. Procédé selon l'une des revendications 1 à 6 caractérisé en ce pour la reconnaissance du visage on compare le visage de l'image acquise à une image stockée dans une base de données.

8. Procédé selon l'une des revendications 1 à 6 **caractérisé en ce que** pour la reconnaissance du visage, on compare le visage contenu dans l'image à un visage contenu dans une image acquise en temps réel.

9. Procédé selon l'une des revendications 1 à 8 **caractérisé en ce que** l'on acquiert les images de l'individu à identifier dans le visible au moyen d'une caméra RGB et la carte de profondeur en utilisant une caméra TOF.

10. Procédé selon l'une des revendications 1 à 8 **caractérisé en ce que** l'on acquiert les images d'un individu à identifier dans le visible au moyen d'une première caméra RGB et la carte de profondeur en utilisant une deuxième caméra RGB, les deux caméras étant positionnées l'une par rapport à l'autre pour obtenir un effet stéréoscopique.

11. Dispositif d'authentification d'un individu comprenant en combinaison au moins les éléments suivants :
- un dispositif d'acquisition d'une image d'un individu dans le domaine du visible,
- un dispositif configuré pour déterminer une carte de profondeur de la scène
- un processeur adapté à exécuter les étapes du procédé selon l'une des revendications 1 à 10.

12. Dispositif selon la revendication 11 **caractérisé en ce que** le dispositif d'acquisition dans le visible est une caméra RGB et le dispositif d'acquisition de la carte de profondeur est une caméra TOF.

13. Dispositif selon la revendication 11 **caractérisé en ce que** le dispositif d'acquisition dans le visible est une première caméra RGB et le dispositif d'acquisition de la carte de profondeur est une deuxième caméra RGB, les deux caméras étant positionnées l'une par rapport à l'autre pour obtenir un effet stéréoscopique.

## Patentansprüche

1. Verfahren zum Authentifizieren einer Person, umfassend das Aufnehmen von Bildern im sichtbaren Bereich von mindestens einer zu identifizierenden Person und gleichzeitig mindestens einer Tiefenkarte der Szene, umfassend die folgenden Schritten:
- Verfügen über ein Bild mit einer bestimmten Qualität, das mindestens ein Gesicht enthält, das anhand von Identitätsdaten erkannt wurde, und Definieren eines geometrischen Bereichs rund um dieses Gesicht im aufgenommenen Bild im sichtbaren Bereich und Projizieren des geometrischen Bereichs auf eine zum gleichen Zeitpunkt t aufgenommene Tiefenkarte, (308),
- Ermitteln eines Abstandswerts Δ(P(Z_{fond}), P(Z_{geo})) zwischen der durchschnittlichen Tiefe des Bereichs Z_{geo} des umrissenen Gesichts und der durchschnittlichen Tiefe eines Hintergrundbereichs Z_{fond} der Tiefenkarte und Vergleichen dieses Abstandswerts mit einem Schwellenwert (seuil1),
- wenn dieser Schwellenwert nicht eingehalten wird, Ausgeben eines Warnsignals, andernfalls
- Erfassen mindestens zweier charakteristischer Punkte im Bild, die einem biometrischen Parameter der Person zugeordnet sind (310), und Projizieren der erfassten charakteristischen Punkte in die Tiefenkarte (311),
- Verifizieren, ob die Größe des Gesichts der Größe einer lebenden Person entspricht (312),
- Verifizieren der relativen Tiefen der charakteristischen Punkte in der Tiefenkarte (313) und Bestätigen, dass das Gesicht lebend ist, um die Person endgültig zu identifizieren oder ein Signal für einen Betrugsversuch auszugeben.

2. Verfahren nach Anspruch 1, **dadurch gekennzeichnet, dass** nach dem Erkennen des Gesichts in dem Bild:
- eine mit dem Gesicht in Verbindung stehende erste geometrische Form definiert wird,
- eine Grenze zwischen einem umrissenen Gesichtsbereich und dem Kartenhintergrund definiert wird,
- wenn der Abstandswert zwischen der Tiefe des Gesichtsbereichs und des Hintergrundbereichs einen bestimmten Schwellenwert erfüllt, ein oder mehrere charakteristische Punkte des Gesichts erkannt werden und der oder die charakteristischen Punkte in die Tiefenkarte, die zum gleichen Zeitpunkt wie das das Gesicht enthaltende Bild aufgenommen wurde, projiziert werden.
- die Gesichtsgröße unter Verwendung des Abstands zwischen ausgewählten charakteristischen Punkten verifiziert wird,
- wenn die Gesichtsgröße der Größe eines lebenden Gesichts entspricht, die Tiefenmerkmale des umrissenen Gesichtsbereichs geprüft werden und
- eine Person identifiziert wird, wenn die Tiefenmerkmale des umrissenen Gesichtsbereichs auf ein lebendes Gesicht schließen lassen, oder ein Signal für einen Identitätsdiebstahlversuch ausgegeben wird.

3. Verfahren nach Anspruch 2, **dadurch gekennzeichnet, dass** die Größe eines Gesichts unter Verwendung des Augenabstands verifiziert wird.

4. Verfahren nach einem der Ansprüche 1 bis 3,
**dadurch gekennzeichnet, dass** das Gesicht durch Ausführen der folgenden Schritte ausgewählt wird:
- Erfassen der Position eines Organs oder eines Gesichtsteils im betreffenden Bild und Ableiten eines Abstands einer Person relativ zu einer Bildaufnahmevorrichtung,
- Messen der Qualität des das Gesicht enthaltenden Bildes und Vergleichen dieses Bildes mit einem Schwellenwert, um zu ermitteln, ob das Gesicht einem lebenden Gesicht entspricht,
- wenn die Bildqualität unzureichend ist, Ausgeben eines Warnsignals.

5. Verfahren nach Anspruch 4, **dadurch gekennzeichnet, dass** die Position der Augen in dem das Gesicht enthaltenden Bild erfasst wird und der Abstand zwischen der zu identifizierenden Person und der Bildaufnahmevorrichtung unter Verwendung des in Pixeln ausgedrückten Augenabstands bestimmt wird.

6. Verfahren nach einem der Ansprüche 4 oder 5,
**dadurch gekennzeichnet, dass** die Qualitätsmessung eines Bildes einen Winkelwert zwischen der Augenachse des im Bild enthaltenen Gesichts und einer horizontalen Achse verwendet.

7. Verfahren nach einem der Ansprüche 1 bis 6,
**dadurch gekennzeichnet, dass** zum Erkennen des Gesichts das Gesicht des aufgenommenen Bildes mit einem in einer Datenbank gespeicherten Bild verglichen wird.

8. Verfahren nach einem der Ansprüche 1 bis 6,
**dadurch gekennzeichnet, dass** zum Erkennen des Gesichts das im Bild enthaltene Gesicht mit einem Gesicht, das in einem in Echtzeit aufgenommenen Bild enthalten ist, verglichen wird.

9. Verfahren nach einem der Ansprüche 1 bis 8,
**dadurch gekennzeichnet, dass** die Bilder der zu identifizierenden Person im sichtbaren Bereich mittels einer RGB-Kamera und die Tiefenkarte unter Verwendung einer TOF-Kamera aufgenommen werden.

10. Verfahren nach einem der Ansprüche 1 bis 8,
**dadurch gekennzeichnet, dass** die Bilder einer zu identifizierenden Person im sichtbaren Bereich mittels einer ersten RGB-Kamera und die Tiefenkarte unter Verwendung einer zweiten RGB-Kamera aufgenommen werden, wobei die beiden Kameras derart relativ zueinander positioniert sind, dass ein stereoskopischer Effekt erzielt wird.

11. Vorrichtung zum Authentifizieren einer Person, umfassend eine Kombination mindestens der folgenden Elemente:
- eine Vorrichtung zum Aufnehmen eines Bildes einer Person im sichtbaren Bereich,
- eine Vorrichtung, die dazu eingerichtet ist, eine Tiefenkarte der Szene zu ermitteln
- einen Prozessor, der dazu geeignet ist, die Schritte des Verfahrens nach einem der Ansprüche 1 bis 10 auszuführen.

12. Vorrichtung nach Anspruch 11, **dadurch gekennzeichnet, dass** die Aufnahmevorrichtung im sichtbaren Bereich eine RGB-Kamera ist und die Aufnahmevorrichtung für die Tiefenkarte eine TOF-Kamera ist.

13. Vorrichtung nach Anspruch 11, **dadurch gekennzeichnet, dass** die Aufnahmevorrichtung im sichtbaren Bereich eine erste RGB-Kamera ist und die Aufnahmevorrichtung für die Tiefenkarte eine RGB-Kamera ist, wobei die beiden Kameras derart relativ zueinander positioniert sind, dass ein stereoskopischer Effekt erzielt wird.

## Claims

1. Method for authenticating an individual comprising acquiring images in the visible range of at least one individual to be identified and simultaneously acquiring at least one depth map of the scene, the method comprising the following steps:
- having an image of given quality containing at least one face recognized with respect to identity data and defining a geometric area around said face in the image acquired in the visible range and projecting the geometric area into a depth map acquired at the same time t, (308),
- determining a difference value Δ(P(Z_{fond}), P(Z_{geo})) between the average depth of the clipped face area Z_{geo} and the average depth of a background area Z_{fond} of the depth map, and comparing this difference value with a threshold value (threshold1),
- if this threshold value is not met, issuing an alert signal, otherwise,
- detecting in the image at least two characteristic points associated with a biometric parameter of the individual, (310), and projecting said detected characteristic points into the depth map, (311),
- checking that the size of the face corresponds to a size of a living individual, (312),
- checking the relative depths of the characteristic points in the depth map, (313), and confirming that the face is alive in order to definitively identify the individual or issuing a fraud attempt signal.

2. Method according to claim 1, **characterized in that,** after recognition of the face in the image:
- a first geometric shape linked to the face is defined,
- a border is defined between a clipped face area and the map background,
- when the value of the difference between the depth of the face area and the background area meets a given threshold value, one or more characteristic points of the face are detected and said one or more characteristic points are projected into the depth map which is acquired at the same time as the image containing the face,
- the size of the face is checked using the distance between selected characteristic points,
- if the face size corresponds to a living face size, the depth characteristics of the clipped face area are verified, and
- an individual is identified, if the depth characteristics of the clipped face area lead to a living face, or an impersonation attempt signal is issued.

3. Method according to claim 2, **characterized in that** the size of a face is checked using the inter-eye distance.

4. Method according to one of claims 1 to 3, **characterized in that** the face is selected by performing the following steps:
- detecting the position of an organ or part of the face in the image in question and deducing an individual's distance from an image acquisition device,
- measuring the quality of the image containing the face and comparing it with a threshold value in order to determine whether the face corresponds to a living face,
- when the image quality is insufficient, issuing an alarm signal.

5. Method according to claim 4, **characterized in that** the position of the eyes in the image containing the face is detected and the distance between the individual to be identified and the image acquisition device is determined using the inter-eye distance expressed in pixels.

6. Method according to one of claims 4 or 5, **characterized in that** the image quality measurement uses a value of the angle between the eye axis of the face contained in the image and a horizontal axis.

7. Method according to one of claims 1 to 6, **characterized in that,** for face recognition, the face of the acquired image is compared with an image stored in a database.

8. Method according to one of claims 1 to 6, **characterized in that,** for face recognition, the face contained in the image is compared with a face contained in an image acquired in real time.

9. Method according to one of claims 1 to 8, **characterized in that** images of the individual to be identified are acquired in the visible range by means of an RGB camera, and the depth map is acquired using a ToF camera.

10. Method according to one of claims 1 to 8, **characterized in that** images of an individual to be identified are acquired in the visible range by means of a first RGB camera and the depth map is acquired using a second RGB camera, the two cameras being positioned relative to one another to obtain a stereoscopic effect.

11. Device for authenticating an individual comprising in combination at least the following elements:
- a device for acquiring an image of an individual in the visible range,
- a device configured to determine a depth map of the scene,
- a processor suitable for performing the steps of the method according to one of claims 1 to 10.

12. Device according to claim 11, **characterized in that** the device for acquisition in the visible range is an RGB camera and the device for acquiring the depth map is a ToF camera.

13. Device according to claim 11, **characterized in that** the device for acquisition in the visible range is a first RGB camera and the device for acquiring the depth map is a second RGB camera, the two cameras being positioned relative to one another to obtain a stereoscopic effect.
